# FASCICULE DE BREVET EUROPEEN

(11) **EP 2 128 521 B1**
(45) Date de publication et mention de la délivrance du brevet: **22.07.2015**
(21) Numéro de dépôt: 09160460.3
(22) Date de dépôt: 18.05.2009
(51) Int. Cl.: B60Q 1/08, F21S 8/10, F21V 14/02

(54) **Projecteur de véhicule automobile susceptible d'émettre un faisceau lumineux orientable.**
Kraftfahrzeugscheinwerfer, der in der Lage ist, einen schwenkbaren Lichtstrahl abzugeben
Automobile headlight capable of emitting an adjustable light beam.

(30) Priorité: 27.05.2008 FR 0802883
(43) Date de publication de la demande: 02.12.2009
(73) Titulaire: Valeo Vision, 93012 Bobigny Cedex (FR)
(72) Inventeur: Le Bars, Jean-François, 89275 Elchingen (DE); Wiegand, Boris, 78467 Kontanz (DE); Bantel, Michael, 73728 Esslingen (DE)
(74) Mandataire: Schaffner, Jean

(56) Documents cités:
- EP-A- 1 267 116
- WO-A-03/008232
- DE-A1- 10 060 734
- DE-A1- 10 204 481
- DE-A1- 10 326 480
- DE-A1-102005 020 085
- FR-A- 2 855 866
- FR-A- 2 871 421
- US-B1- 6 281 806

## Description

### Domaine technique :

L'invention se rapporte à un projecteur de véhicule automobile destiné à émettre un faisceau lumineux orientable.

L'invention se rapporte plus particulièrement à un projecteur de véhicule automobile qui est destiné à émettre un faisceau lumineux orientable et qui comporte :
- une source lumineuse ponctuelle qui est susceptible d'émettre des rayons lumineux ;
- des moyens optiques qui projettent l'image de la source lumineuse pour former le faisceau lumineux, et qui comportent un foyer objet formé par l'intersection entre son axe optique et son plan focal objet ;
- des moyens pour orienter le faisceau lumineux autour d'au moins un axe de pivotement.

### Technique antérieure :

Les véhicules automobiles sont généralement équipés de projecteurs aptes à émettre différents types de faisceaux lumineux dont on citera les plus connus (les faisceaux étant émis par un ou plusieurs modules optiques dans le projecteur principal, ou indépendamment, comme cela peut être le cas des modules anti-brouillard) :
- Des feux de position fixes, d'intensité et de portée faible permettent de signaler la présence du véhicule dans l'obscurité.
- Des feux de croisement, ou codes, d'intensité plus forte et de portée sur la route avoisinant 70 mètres, sont utilisés essentiellement la nuit. Il s'agit d'un faisceau lumineux large qui éclaire la route sur toute sa largeur. La répartition du faisceau lumineux est telle qu'elle permet de ne pas éblouir le conducteur d'un autre véhicule roulant en sens inverse.

Pour la suite de la description, les autres véhicules et leurs conducteurs seront appelés "véhicules adverses" et "conducteurs adverses".
- Des feux de route à longue portée permettent d'éclairer la route en avant du véhicule sur une distance avoisinant les 300 mètres. Il s'agit d'un faisceau lumineux large qui éclaire la route sur toute sa largeur. Ces feux très puissants doivent être éteints lorsqu'on croise un véhicule adverse sous peine d'éblouir son conducteur.
- On peut encore citer les feux antibrouillard, les feux diurnes.

Lorsqu'un conducteur circule nuitamment sur une route à grande vitesse non éclairée fréquentée par d'autres véhicules, il est impératif d'allumer les feux de croisement au lieu des feux de route pour ne pas éblouir les conducteurs adverses. Cependant, les feux de croisement ne permettent pas d'éclairer la route suffisamment loin pour permettre d'anticiper d'éventuels obstacles.

De plus, les véhicules adverses ayant eux aussi allumé leurs feux de croisement, il se produit un effet de contre-jour qui diminue encore la visibilité du conducteur.

Il est proposé dans le document FR 2 855 866 un projecteur émettant un faisceau lumineux orientable selon le préambule de la revendication 1 et qui comporte un guide de lumière associé à un organe de terminaison optique, formant une source lumineuse ponctuelle, qui est monté mobile.

### Résumé de l'invention

L'invention propose d'équiper le véhicule avec un projecteur du type décrit précédemment, la source lumineuse étant mobile sensiblement dans le plan focal objet selon une direction apte à provoquer le pivotement du faisceau lumineux, et notamment orthogonale à l'axe de pivotement, remarquable en ce que la source lumineuse est formée par l'image virtuelle d'une diode électroluminescente fixe par un miroir qui est monté rotatif autour d'un axe de rotation parallèle à l'axe de pivotement du faisceau lumineux.

Selon d'autres caractéristiques optionnelles de l'invention :
- les moyens optiques sont formés par une lentille convergente ;
- la rotation du miroir est commandée automatiquement par un moteur.

Avantageusement, le projecteur est dépourvu de guide de lumière pour guider la lumière émise par la source de lumière, ce qui peut permettre d'éviter de réduire la luminance.

L'invention concerne aussi un dispositif d'éclairage automatique et sélectif d'obstacles sur une scène de route pour un véhicule automobile comportant :
- au moins un projecteur réalisé selon les enseignements de l'invention ;
- des moyens automatiques de détection et de localisation d'au moins un obstacle distant du véhicule ;
- et des moyens de commande de l'orientation et de l'allumage du faisceau lumineux en fonction de la localisation de l'obstacle détecté pour éclairer sélectivement l'obstacle détecté avec le faisceau lumineux.

Selon d'autres caractéristiques optionnelles du dispositif :
- les moyens automatiques de détection et de localisation de l'obstacle comportent un dispositif de prise d'une image de la scène de route qui est embarqué à bord du véhicule ; et ils comportent des moyens électroniques de traitement de l'image aptes à détecter des obstacles prédéterminés sur l'image et aptes à localiser lesdits obstacles par rapport au véhicule ;
- le dispositif de prise d'image est formé par une caméra infrarouge.

L'invention concerne aussi un procédé de commande d'un dispositif d'éclairage automatique et sélectif d'obstacles sur une scène de route pour un véhicule automobile comportant :
- au moins un projecteur émettant un faisceau lumineux orientable, selon la revendication 1 ;
- des moyens automatiques de détection et de localisation d'au moins un obstacle distant du véhicule ;
- et des moyens de commande de l'orientation et de l'allumage du faisceau lumineux en fonction de la localisation de l'obstacle détecté pour éclairer sélectivement l'obstacle détecté avec le faisceau lumineux.

Les documents DE 100 60 934 et US 6 281 806 décrivent un tel procédé de commande, qui comporte successivement les étapes suivantes :
- une première étape de détection d'un obstacle ;
- une deuxième étape d'orientation qui est déclenchée lorsqu'un obstacle est détecté, au cours de laquelle le faisceau lumineux du projecteur est orienté par les moyens de commande en direction de l'obstacle détecté ;
- une troisième étape d'allumage du faisceau lumineux au cours de laquelle l'obstacle détecté est éclairé par le faisceau lumineux.

Selon le procédé selon l'invention, lorsqu'au moins deux obstacles sont détectés simultanément, la deuxième étape et la troisième étape sont répétées cycliquement alternativement pour chacun des obstacles détectés avec une fréquence déterminée, de manière que les obstacles détectés soient éclairés alternativement, le projecteur étant éteint lors de son orientation d'un obstacle vers l'autre obstacle.

Selon d'autres caractéristiques optionnelles du procédé :
- l'éclairage alternatif des deux obstacles détectés est effectué avec une fréquence supérieure au temps de rémanence de la lumière sur un oeil humain, de manière qu'un observateur ait l'impression que les deux obstacles détectés sont éclairés simultanément ;
- lorsque l'obstacle détecté présente une surface supérieure à la surface éclairée par le faisceau lumineux, le projecteur est commandé de manière que le faisceau lumineux balaye la surface de l'obstacle détecté lors de la troisième étape ;
- lorsque aucun obstacle n'est détecté lors de la première étape, le faisceau lumineux est orienté de manière à éclairer le bas côté de la route sur laquelle roule le véhicule.
- la position du faisceau sur le bord de route est calculée par les moyens du dispositif, de façon à suivre les courbes de virage en fonction de paramètres, tels que la vitesse, et/ou d'autres informations, telles que le GPS.
- le dispositif selon l'invention est intégré au projecteur
- il peut y avoir plusieurs, notamment deux, dispositifs distincts pour un véhicule ;
- le ou un des dispositifs au moins peut être équipé de diodes infra rouges (IR).

### Descriptif des figures :

D'autres caractéristiques et avantages apparaîtront au cours de la lecture de la description qui va suivre pour la compréhension de laquelle on se reportera aux dessins annexés parmi lesquels :
- la figure 1 est une vue de face qui représente schématiquement l'avant d'un véhicule automobile équipé d'un dispositif d'éclairage automatique réalisé selon les enseignements de l'invention ;
- la figure 2 est une vue de côté du véhicule de la figure 1 qui représente schématiquement un faisceau de croisement produit par des projecteurs connus et un faisceau lumineux produit par un projecteur à faisceau orientable réalisé selon les enseignements de l'invention ;
- la figure 3 est une vue de dessus du véhicule de la figure 2 ;
- la figure 4 est un schéma qui représente les principaux organes du dispositif d'éclairage automatique ;
- la figure 5 est une vue de dessus qui représente schématiquement le projecteur à faisceau orientable du dispositif d'éclairage automatique réalisé selon un premier mode de réalisation non couvert par l'invention ;
- la figure 6 est une vue similaire à celle de la figure 5 qui représente le projecteur à faisceau orientable réalisé selon un deuxième mode de réalisation non couvert par l'invention ;
- la figure 7 est une vue similaire à celle de la figure 5 qui représente le projecteur à faisceau orientable réalisé selon l'invention ;
- la figure 8 est une vue schématique qui représente une image d'une scène de route qui a été prise par le dispositif de prise d'image et sur laquelle un obstacle à éclairer a été détecté ;
- la figure 9 est une vue similaire à celle de la figure 8 qui représente une image d'une scène de route sur laquelle deux obstacles à éclairer ont été détectés.

### Description détaillée de l'invention :

Dans la suite de la description, des éléments ayant des fonctions similaires, analogues ou identiques seront désignés par les mêmes numéros de référence.

Dans la suite de la description, on adoptera à titre non limitatif des orientations longitudinale orientée d'arrière en avant, verticale orientée de bas en haut, et transversale orientée de gauche à droite, qui sont indiquées par le trièdre "L,V,T" des figures.

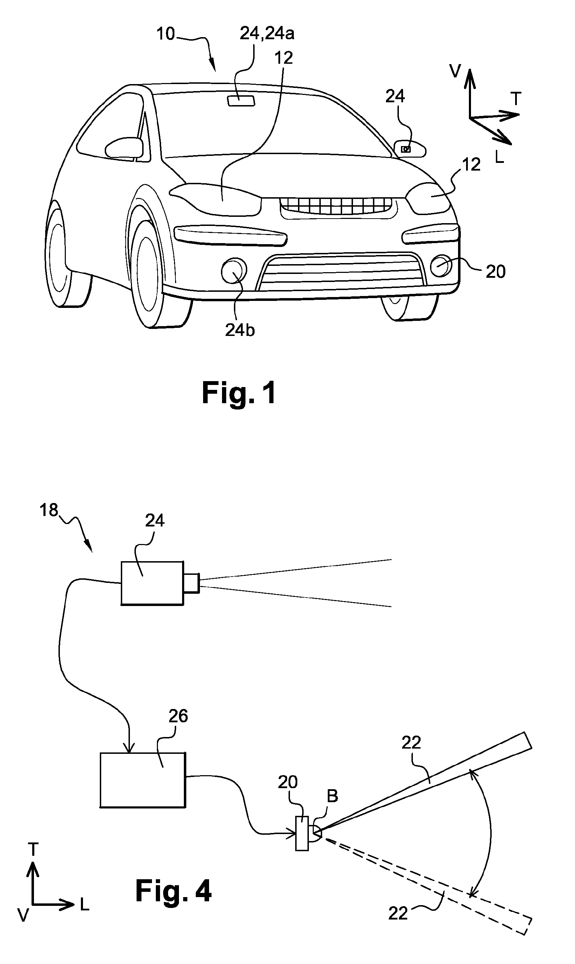

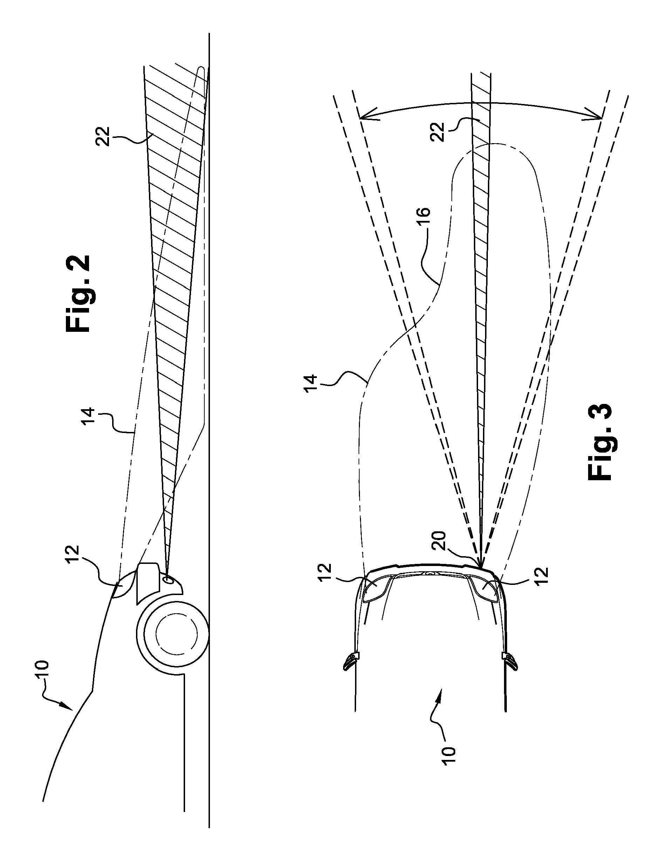

On a représenté à la figure 1 l'avant d'un véhicule automobile 10. De manière classique, le véhicule automobile 10 comporte deux projecteurs 12 avant droit et avant gauche qui sont susceptibles d'émettre au choix du conducteur un faisceau lumineux de croisement 14, comme illustré aux figures 2 et 3, ou un faisceau lumineux de route, qui éclairent la route longitudinalement en avant du véhicule 10.

Comme représenté à la figure 2, le faisceau lumineux de croisement 14 est légèrement plongeant de manière à présenter une portée moyenne de faible distance, par exemple d'environ 70 mètres. Comme représenté à la figure 3, il s'agit d'un faisceau lumineux très large qui est adapté pour éclairer la route sur toute sa largeur.

De plus, comme illustré à la figure 3, le faisceau de croisement 14 comporte une ligne de coupure 16 étagée qui permet d'éclairer à une portée plus courte du côté de croisement des véhicules automobiles adverses, comme représenté en haut de la figure 3, et à une portée plus longue sur le bas-côté de la route, comme représenté en bas de la figure 3.

Le faisceau lumineux de route (non représenté) présente une portée plus importante, par exemple supérieure à 150 mètres, qui permet d'éclairer toute la route sur ses largeur et hauteur.

Le faisceau lumineux de croisement 14 est plus particulièrement utilisé sur des routes fréquentées par d'autres automobilistes. Leur portée réduite par rapport au faisceau lumineux de route, et leur ligne de coupure 16, permettent de trouver un compromis pour éclairer la route sans pour autant éblouir les autres automobilistes.

Cependant, dans certaines conditions, on a observé que la faible portée du faisceau de croisement 14 ne permet pas au conducteur du véhicule 10 d'anticiper la présence d'obstacles suffisamment tôt pour les éviter, notamment lorsque le véhicule 10 roule à une vitesse élevée, par exemple au-delà de 80 km/h.

Pour résoudre ce problème, l'invention propose d'équiper le véhicule automobile 10 avec un dispositif d'éclairage 18 automatique et sélectif d'obstacles sur une scène de route, comme représenté à la figure 4.

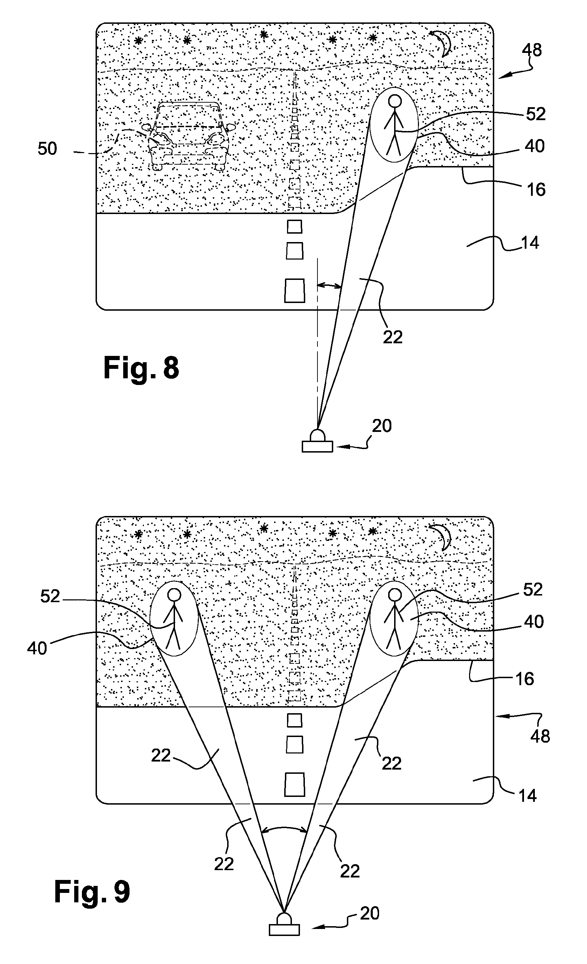

On définit la scène de route comme étant la vue qui s'offre au regard du conducteur du véhicule 10 qui regarde vers l'avant lorsqu'il roule, traditionnellement à travers le pare-brise. Une telle scène de route est représentée aux figures 8 et 9.

Le dispositif d'éclairage 18 automatique et sélectif comporte notamment un projecteur lumineux 20 qui est susceptible d'émettre un faisceau lumineux orientable 22 qui est fin et étroit relativement au faisceau lumineux de croisement 14, et qu'on désignera par la suite comme un "faisceau lumineux orientable 22".

Un tel faisceau lumineux 22 est représenté aux figures 2 et 3. Le faisceau lumineux 22 est plus particulièrement suffisamment étroit pour permettre l'éclairage d'obstacles distants sans éblouir un conducteur adverse.

Ce projecteur 20 sera désigné par la suite "projecteur à faisceau orientable 20" pour le distinguer des blocs de projecteurs 12 classiques.

Comme représenté aux figures 2 et 3, le faisceau lumineux 22 est orienté sensiblement parallèlement à l'axe longitudinal de manière à présenté une portée plus longue que le faisceau de croisement 14. Le faisceau lumineux 22 présente par exemple au moins la même portée que le faisceau de route.

Le faisceau lumineux 22 est susceptible d'être orienté autour d'un axe vertical "B", qui est agencé dans le projecteur à faisceau lumineux orientable 20, entre deux positions angulaires extrêmes qui sont représentées en traits interrompus à la figure 4 et qui permettent de balayer au moins une largeur équivalente à celle du faisceau lumineux de route à sa portée maximale. Le faisceau lumineux 22 est par exemple susceptible d'être pivoté de 6° dans un sens ou dans l'autre de part et d'autre d'un axe longitudinal.

Le projecteur à faisceau orientable 20 est par exemple agencé sur la face avant du véhicule automobile 10, par exemple dans ou au-dessous des projecteurs 12. La structure du projecteur à faisceau orientable 20 sera décrite plus en détail par la suite.

Le véhicule 10 ne comporte ici qu'un unique projecteur à faisceau orientable 20, mais on comprendra que le dispositif d'éclairage 18 peut aussi comporter une pluralité de projecteurs à faisceau orientable.

Comme représenté à la figure 4, le dispositif d'éclairage 18 comporte aussi des moyens automatiques de détection et de localisation d'au moins un obstacle situé à distance longitudinalement en avant du véhicule 10.

Plus particulièrement, les moyens automatiques de détection et de localisation de l'obstacle comportent un dispositif 24 de prise d'une image de la scène de route longitudinalement en avant du véhicule 10. Il peut s'agir d'une caméra qui peut être positionnée.

Le dispositif de prise d'image 24 est embarqué à bord du véhicule 10. Le dispositif de prise d'image 24 est ici formé par une caméra 24 sensible aux rayonnement infrarouge qui sera par la suite appelé "caméra infrarouge 24". La caméra infrarouge 24 est par exemple agencée au niveau du rétroviseur central 24a ou du bouclier/pare chocs 24b du véhicule 10, notamment dans la partie basse située au-dessous des projecteurs, comme illustré à la figure 1.

Le dispositif de prise d'image 24 est avantageusement apte à prendre séquentiellement plusieurs images de la scène de route à une fréquence suffisante pour tenir compte du déplacement relatif de l'obstacle par rapport au véhicule 10 afin de maintenir le faisceau lumineux 22 braqué sur l'obstacle détecté malgré les déplacements relatifs de l'obstacle par rapport au véhicule 10.

Les moyens automatiques de détection et de localisation comportent aussi une unité électronique 26 de traitement de l'image prise par la caméra infrarouge 24. L'unité électronique de traitement 26 est programmée pour détecter des obstacles prédéterminés sur l'image.

L'unité électronique de traitement 26 est apte à localiser lesdits obstacles détectés avec une précision suffisante pour permettre d'orienter le faisceau lumineux 22 en direction de l'obstacle détecté pour l'éclairer. La localisation est par exemple effectuée selon des coordonnées longitudinale et transversale par rapport au véhicule 10.

Un tel dispositif de prise d'image 24 est déjà connu de l'état de la technique par exemple par le document EP-A-1 496 689. Il ne sera donc pas décrit plus en détails par la suite.

Le dispositif d'éclairage automatique 18 comporte aussi des moyens de commande de l'orientation et de l'allumage du faisceau lumineux 22 du projecteur à faisceau orientable 20 en fonction de la localisation de l'obstacle détecté afin d'éclairer sélectivement l'obstacle détecté avec le faisceau lumineux 22. Dans l'exemple de réalisation représenté à la figure 2, les moyens de commande sont intégrés à l'unité électronique de traitement 26.

Le faisceau mobile 22 est au dessus de la coupure à 70 mètres selon le faisceau 14, tels que représentés à la figure 1.

Le projecteur à faisceau orientable 20 va à présent être décrit en détails.

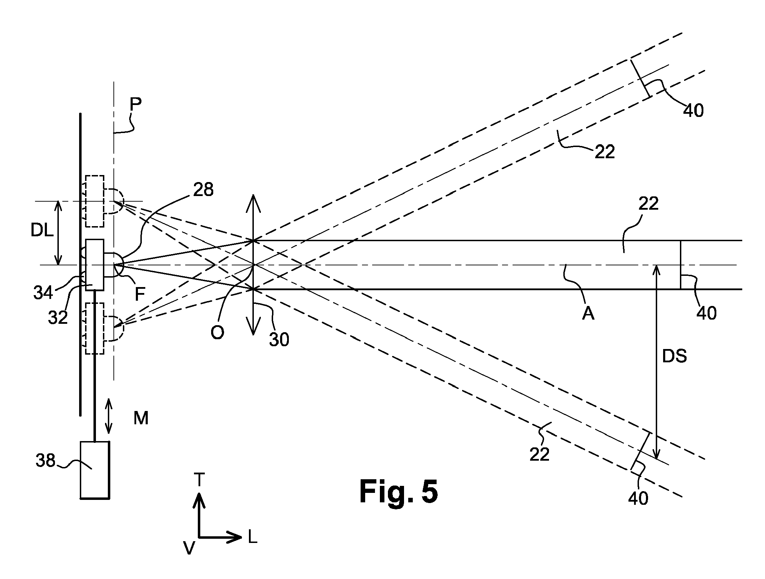

Selon un premier mode de réalisation non couvert par l'invention qui est représenté à la figure 5, le projecteur à faisceau orientable 20 comporte une source lumineuse ponctuelle 28 qui est susceptible d'émettre des rayons lumineux. Par l'adjectif "ponctuelle", on comprendra qu'il s'agit d'une source lumineuse 28 de taille très réduite, par exemple un disque de l'ordre de 1 mm de diamètre.

Dans ce premier mode de réalisation, la source lumineuse ponctuelle 28 est formée par une diode électroluminescente 28 qui est susceptible d'émettre des rayons lumineux dans un cône d'axe principal longitudinal.

Par rapport à des lampes à décharge dites lampes xénon, ou à incandescence, à performances lumineuses égales, les diodes électroluminescentes présentent l'avantage de consommer peu d'énergie, et elles ont une durée de vie plus longue. De plus leur temps de réponse entre leur état allumé et leur état éteint est très court, de l'ordre de quelques microsecondes.

La diode électroluminescente 28 utilisée présente par exemple un rendement d'au moins 100 Im/W pour une diode 28 de 1 mm de diamètre. La luminance de la diode électroluminescente 28 est par exemple de l'ordre de 4000 Im/sr/cm².

Le projecteur à faisceau orientable 20 comporte aussi des moyens optiques 30 qui projettent l'image de la source lumineuse 28 pour former le faisceau lumineux 22.

Les moyens optiques 30 sont ici formés par une lentille convergente 30 qui est agencée longitudinalement en avant de la diode électroluminescente 28. La lentille 30 est montée fixe sur le véhicule automobile 10.

La lentille convergente 30 présente un foyer objet "F" formé par l'intersection entre son axe longitudinal optique "A" et son plan focal objet "P".

La vergence de la lentille convergente 30 est de préférence très élevée, par exemple de l'ordre de 100 dioptries, de manière que le projecteur à faisceau orientable 20 soit très compact, et, comme cela sera expliqué par la suite, de manière que le pivotement du faisceau orientable 22 entre ses deux positions angulaires extrêmes soit effectué par un déplacement proportionnellement très court de la source lumineuse 28, de l'ordre de 10 mm.

Le projecteur à faisceau orientable 20 comporte en outre des moyens pour orienter le faisceau lumineux 22 autour d'au moins un axe de pivotement "B" qui est ici un axe vertical.

A cet effet, la source lumineuse 28 est montée mobile sensiblement dans le plan focal objet "P" selon une direction transversale de coulissement indiquée par la double flèche "M" le long d'une trajectoire passant par le foyer objet "F". Ainsi, le faisceau lumineux 22 est formé de rayons lumineux sensiblement parallèles ou très peu divergents.

La diode électroluminescente 28 est ici montée coulissante entre deux positions transversales extrêmes, représentées en traits interrompus à la figure 5, avec un débattement de plus ou moins cinq millimètres de part et d'autre de l'axe optique "A", c'est-à-dire que le distance à parcourir pour aller d'une position transversale extrême à l'autre est ici de 10 mm.

Ainsi, le pivotement du faisceau lumineux 22 est obtenu en faisant coulisser transversalement la diode électroluminescente 28 de part et d'autre de l'axe optique "A". Le faisceau lumineux 22 est pivotant autour d'un axe vertical de pivotement "B" passant par le centre optique "O" de la lentille 30.

La diode électroluminescente 28 est par exemple montée sur un coulisseau 32 et elle est alimentée en électricité par des balais 34 de connexion électrique qui glissent sur des pistes 36 fixes par rapport au véhicule automobile 10.

La position transversale de la diode électroluminescente 28 est commandée automatiquement par un moteur électrique 38, par exemple par un moteur piézoélectrique 38 qui est piloté par l'unité électronique de traitement 26. Le moteur piézoélectrique 38 présente par exemple une vitesse maximale d'environ 500 mm/s et une accélération de 15g.

Comme représenté en traits pleins à la figure 5, lorsque la diode électroluminescente 28 est agencée au foyer objet "F" de la lentille 30, son image par la lentille 30 est une tache lumineuse, par la suite appelée "spot" 40, qui est alignée sur l'axe optique "A".

Pour une diode électroluminescente 28 présentant un diamètre de 1 millimètre, le spot 40 présente par exemple la forme d'un disque de 1 mètre de diamètre à une distance de 100 mètres longitudinalement en avant de la lentille 30. Cette dimension est suffisante pour éclairer un obstacle de manière visible pour le conducteur du véhicule 10 sans pour autant risquer d'éblouir des conducteurs adverses.

En variante non représentée, la source lumineuse est formée par deux ou plusieurs diodes électroluminescentes superposées verticalement. Pour la configuration à deux diodes, le spot présente alors une dimension globalement rectangulaire de 2 mètres de haut sur un mètre de large à une distance d'au moins 100 m. Cette configuration est particulièrement avantageuse lorsque l'obstacle à éclairer est un piéton.

Lorsque la diode électroluminescente 28 est décalée par coulissement, par exemple vers la droite, par rapport à l'axe optique "A", d'une distance "DL" le spot lumineux 40, à 100 mètres en avant de la lentille 30, est décalé transversalement dans l'autre sens, par exemple vers la gauche, d'une distance "DS" démultipliée. Le rapport entre la distance "DL" de déplacement de la diode électroluminescente 28 et la distance "DS" de déplacement du spot 40 peut être calculée en utilisant le théorème de Thalès, et l'angle de pivotement du faisceau lumineux 22 peut être déduit de formules trigonométriques bien connues de l'homme du métier.

Un tel projecteur à faisceau orientable 20 permet d'orienter très rapidement le faisceau lumineux 22, puis d'allumer aussi très rapidement la diode électroluminescente 28 du fait de son temps de réponse très court.

Le moteur piézoélectrique 38 utilisé dans l'exemple représenté à la figure 5 permet de déplacer la diode électroluminescente 28, en partant de sa position transversale médiante sur l'axe optique "A", pour atteindre l'une de ses positions transversales extrêmes en moins de 25 ms. C'est-à-dire que même à une vitesse aussi élevée que 150 km/h, le véhicule 10 ne parcourt que 1 mètre entre le moment où l'ordre d'orientation du faisceau lumineux 22, c'est-à-dire l'ordre de coulissement de la diode 28, est transmis au moteur 38 et le moment auquel le faisceau lumineux 22 est orienté dans une position angulaire extrême.

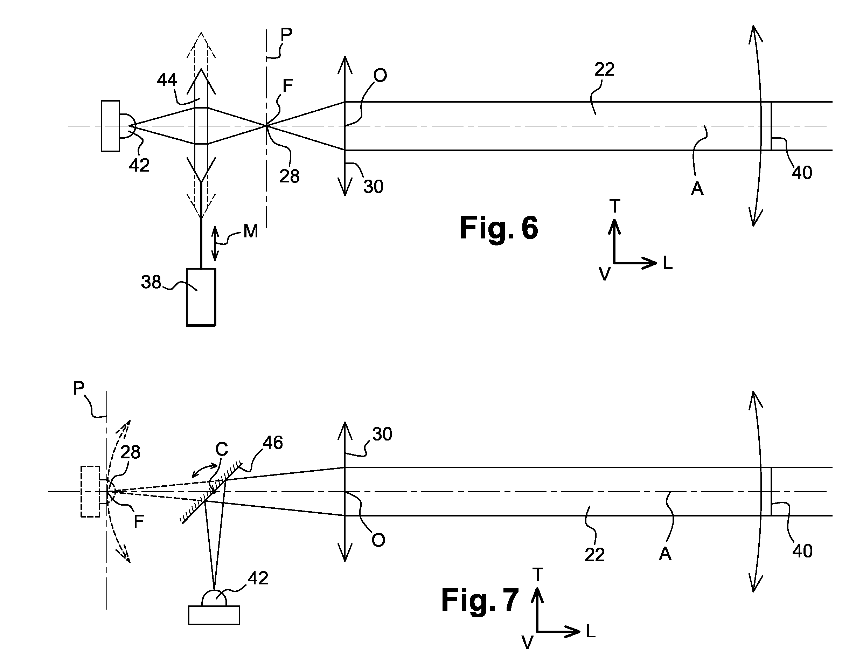

Selon un deuxième mode de réalisation non couvert par l'invention du projecteur à faisceau orientable 20 qui est représenté à la figure 6, la source lumineuse 28 est ici formée par l'image réelle d'une diode électroluminescente 42 fixe par un condenseur optique 44 qui est monté coulissant parallèlement au plan focal objet "P" de la lentille 30. Le condenseur optique 44 est plus particulièrement agencé de manière que l'image réelle 28 de la diode 42 soit agencée dans le plan focal objet "P" de la lentille convergente 30.

La diode électroluminescente 42 présente les mêmes caractéristiques que la diode électroluminescente 28 du premier mode de réalisation.

Ainsi, le montage de la diode électroluminescente 42, et notamment sa connexion électrique, est simplifié par rapport au premier mode de réalisation du projecteur à faisceau orientable 20 puisque la diode électroluminescente 42 est fixe. Son image 28 par le condenseur optique 44 peut être déplacée le long de sa trajectoire de coulissement par coulissement transversal du condenseur optique 44. Le débattement transversal du condenseur optique 44 est identique à celui de la diode électroluminescente 42 dans le premier mode de réalisation, par exemple de plus ou moins cinq millimètres de part et d'autre de l'axe optique "A".

Le fonctionnement de ce projecteur à faisceau orientable 20 est identique à celui du projecteur à faisceau orientable 20 réalisé selon le premier mode de réalisation, à la différence que le pivotement du faisceau lumineux 22, c'est-à-dire le déplacement du spot 40 transversalement dans un sens, est obtenu par le coulissement du condenseur optique 44 transversalement dans l'autre sens. Le coulissement transversal du condenseur optique 44 est commandé par un moteur piézoélectrique 38 identique à celui du premier mode de réalisation.

Selon le mode de réalisation selon l'invention du projecteur à faisceau orientable 20, la source lumineuse 28 est formée par l'image virtuelle d'une diode électroluminescente 42 fixe par un miroir 46 plan qui est monté rotatif autour d'un axe de rotation "C" parallèle à l'axe de pivotement "B" du faisceau lumineux 22.

Selon une variante non représentée de l'invention, le miroir présente une courbure adaptée pour participer à la formation du faisceau lumineux fin et étroit avec la lentille convergente.

Plus particulièrement, la diode électroluminescente 42 est montée de manière à émettre le cône de rayons lumineux selon un axe principal transversal.

Le miroir rotatif 46 est interposé sur le trajet des rayons lumineux divergents. L'axe vertical de rotation "C" du miroir 46 est plus particulièrement sécant avec l'axe optique "A" de la lentille 30, entre deux positions angulaires extrêmes de part et d'autre d'une position angulaire médiante dans laquelle il forme un angle de 45° par rapport à l'axe optique de "A" la lentille 30.

Le miroir rotatif 46 est plus particulièrement interposé entre la lentille 30 et le plan focal objet "P" de la lentille convergente 30 de manière que dans la position angulaire médiante du miroir 46, l'image virtuelle 28 de la diode électroluminescente 42 est agencée au foyer objet "F" de la lentille 30. Dans cette position angulaire médiante du miroir 46, le spot lumineux 40 obtenu par l'intermédiaire de la lentille 30 est ainsi aligné sur l'axe optique "A".

Lorsque le miroir 46 est pivoté de quelques degrés dans un sens ou dans l'autre, l'image virtuelle 28 de la diode électroluminescente 42 est décalée transversalement vers la droite ou vers la gauche en suivant sensiblement le plan focal objet "P". Le spot lumineux 40 est ainsi déplacé en sens opposé vers la gauche ou vers la droite de part et d'autre de l'axe optique "A", comme expliqué dans les deux premiers modes de réalisation.

En réalité, l'image virtuelle 28 suit une trajectoire en arc de cercle, cependant, l'angle au centre de l'arc est suffisamment faible pour être assimilé à une portion de droite.

La rotation du miroir 46 est commandée par un moteur (non représenté), par exemple par un moteur pas à pas qui est piloté par l'unité électronique de traitement 26. Le moteur présente des caractéristiques similaires à celles du moteur des deux premiers modes de réalisation du projecteur à faisceau orientable 20.

Selon une variante non représentée de l'invention, une deuxième lentille convergente est interposée entre la diode électroluminescente et le miroir de manière que les rayons lumineux émis par la diode électroluminescente soient concentrés en un point de concentration situé au-delà du miroir. Le miroir est alors agencé longitudinalement en arrière du foyer objet de la première lentille convergente de manière que l'image réelle du point de concentration soit agencé dans le plan focal objet de la première lentille convergente. L'image réelle du point de concentration forme ainsi la source lumineuse. Le projecteur à faisceau orientable réalisé selon cette variante fonctionne de la même manière que dans le troisième mode de réalisation de l'invention.

On décrit à présent un procédé de commande d'un dispositif d'éclairage 18 selon le mode de réalisation correspondant à l'invention.

Le procédé est ici déclenché lorsque le véhicule automobile 10 roule de nuit et que son faisceau de croisement 14 est allumé. Le procédé de commande comporte successivement les étapes suivantes.

Lors d'une première étape "E1" de détection d'un obstacle, la caméra infrarouge 24 prend une image 48 de la scène de route en avant du véhicule 10, comme représentée à la figure 8. La partie inférieure de l'image 48 est éclairée par le faisceau lumineux de croisement 14 qui est délimité supérieurement par sa ligne de coupure 16 tandis que la partie supérieure de l'image 48 est dans l'obscurité.

L'image 48 est alors analysée par l'unité électronique de traitement 26.

L'unité électronique de traitement 26 est ici programmée de manière à analyser les parties sombres de l'image 48 qui ne sont pas éclairée par le faisceau lumineux de croisement 14. L'unité électronique de traitement 26 est avantageusement apte à distinguer entre les obstacles à éclairer, tels que des piétons 52, et des véhicules automobiles adverses 50 roulant sur la même route. En effet, il est préférable que les véhicules adverses ne soient pas éclairés par le spot lumineux 40 sous peine d'éblouir les conducteurs adverses.

Dans l'exemple représenté à la figure 8, un piéton 52 a été détecté et localisé le long du bas-côté de la route, au-delà de la portée du faisceau lumineux de croisement 14.

Une deuxième étape "E2" d'orientation du faisceau lumineux 22 est déclenchée lorsqu'un obstacle est détecté, il s'agit ici du piéton 52. Au cours de cette deuxième étape, le projecteur à faisceau orientable 20 est orienté par les moyens de commande en direction de l'obstacle. Le moteur électrique 38 fait alors coulisser la source lumineuse 28 pour positionner la source lumineuse 28 de manière adéquate pour éclairer le piéton 52 détecté.

Durant cette deuxième étape "E2", la source lumineuse 28 peut être éteinte si aucun obstacle n'avait été détecté sur l'image précédente, ou allumée dans le cas contraire de manière à ce que l'éclairage de l'obstacle détecté soit continu d'une image à l'autre.

Puis, lorsque le faisceau lumineux n'est pas déjà allumé, une troisième étape "E3" d'allumage du faisceau lumineux 22 est déclenchée, au cours de laquelle la diode électroluminescente 42 est allumée de manière que le spot lumineux 40 éclaire le piéton 52 détecté.

Ce cycle depuis la première étape "E1" jusqu'à la troisième étape "E3" ne prend avantageusement que quelques millisecondes. A l'issu de la troisième étape, le cycle est réitéré avec une nouvelle image 18.

Selon le procédé selon l'invention, en référence à la figure 9, lorsqu'au moins deux obstacles sont détectés simultanément, la deuxième étape "E2" et la troisième étape "E3" sont répétées cycliquement alternativement pour chacun des obstacles avec une fréquence déterminée, de manière que les obstacles soient éclairées alternativement, le projecteur à faisceau orientable 20 étant éteint lors de son orientation vers l'autre obstacle.

Ainsi, le projecteur à faisceau orientable 20 est orienté vers le premier obstacle, puis il est allumé. Le projecteur à faisceau orientable 20 est ensuite éteint pour être orienté vers le deuxième obstacle sans que les parties de la scène de route non encombrées par un obstacle ne soient balayées par le faisceau lumineux 22. Lorsque le projecteur à faisceau orientable 20 est orienté vers le deuxième obstacle il est allumé. Puis il est de nouveau éteint et orienté vers le premier obstacle. Les deux obstacles sont ainsi éclairés alternativement à une fréquence déterminée.

L'éclairage alternatif des deux obstacles est effectué avec une fréquence supérieure au temps de rémanence de la lumière sur un oeil humain, de manière qu'un observateur ait l'impression que les deux obstacles sont éclairés simultanément. A cet effet, le temps d'exposition de chaque obstacle à l'éclairage du faisceau lumineux 22 est suffisant pour imprimer la rétine.

Cet éclairage alternatif est réalisé jusqu'à ce que le procédé soit réitéré.

Pour réaliser cette variante de l'invention, les rayons lumineux sont avantageusement fournis par une diode électroluminescente 42 qui présente un temps de réponse très court et qui peut ainsi être éteinte et allumée très rapidement de manière à réaliser plusieurs cycles d'éclairage alternatif pour une même image 48. En outre, le déplacement très court de la source lumineuse 28 pour orienter le faisceau lumineux 22 associé aux caractéristiques du moteur électrique 38 permettent avantageusement d'orienter le faisceau lumineux 22 suffisamment rapidement pour donner un effet d'allumage simultané des deux obstacles.

Selon une variante non représentée de l'invention, lorsque l'obstacle détecté présente une surface supérieure à la surface éclairée par le faisceau lumineux, le projecteur à faisceau orientable est commandé de manière que le faisceau lumineux balaye la surface de l'obstacle détecté lors de la troisième étape, la diode électroluminescente restant allumée durant le balayage. Ainsi, le balayage étant suffisamment rapide, le conducteur a l'impression que l'obstacle détecté est éclairé par un unique faisceau lumineux plus large que le faisceau lumineux.

Lorsque aucun obstacle n'est détecté lors de la première étape "E1", le faisceau lumineux 22 est orienté de manière à éclairé le bas côté de la route sur laquelle roule le véhicule 10. Dans cette configuration, le positionnement du faisceau lumineux et sa trajectoire sont réalisés à l'aide du dispositif 18 qui est capable de déterminer la position optimale en fonction de divers paramètres tels que le profil de virage détecté par 18, la vitesse et/ou les informations disponibles sur la localisation du véhicule (GPS),...

Selon une variante de l'invention, lorsque aucun obstacle n'est détecté, le projecteur à faisceau orientable 20 est éteint.

Le procédé est réitéré à une fréquence suffisamment grande pour que le faisceau lumineux 22 puisse rester braqué sur l'obstacle en permanence tant qu'il n'est pas à portée du faisceau lumineux de croisement 14, et ce malgré les déplacements relatifs de l'obstacle par rapport au véhicule 10.

Dans les modes de réalisation décrits précédemment, le faisceau lumineux 22 du projecteur à faisceau orientable 20 est pivotant autour d'un unique axe vertical "B". On comprendra que l'invention englobe aussi des projecteurs à faisceau orientable 20 du même type dans lesquels le faisceau lumineux 22 est pivotant autour d'un deuxième axe transversal pour permettre un éclairage plus précis des obstacles.

Le projecteur à faisceau orientable 20 et le dispositif de d'éclairage 18 sélectif automatique réalisés selon les enseignements de l'invention permettent de fournir en permanence au conducteur du véhicule 10 ainsi équipé un confort de conduite de nuit similaire à celui obtenu par un faisceau de route en terme de détection d'obstacles tout en préservant les conducteurs adverses du risque d'éblouissement.

Le projecteur à faisceau orientable 20 permet notamment d'obtenir un faisceau lumineux 22 qui est orientable très rapidement en utilisant peu d'énergie.

## Revendications

1. Projecteur (20) de véhicule automobile destiné à émettre un faisceau lumineux (22) orientable et qui comporte :
- une source lumineuse ponctuelle (28) ;
- des moyens optiques (30) qui projettent l'image de la source lumineuse (28) pour former le faisceau lumineux (22), et qui comportent un foyer objet (F) formé par l'intersection entre son axe optique (A) et son plan focal objet (P) ;
- des moyens (38, 44, 46) pour orienter le faisceau lumineux (22) autour d'au moins un axe de pivotement (B) ;
la source lumineuse (28) étant mobile sensiblement dans le plan focal objet (P) selon une direction apte à provoquer le pivotement du faisceau lumineux (22), direction notamment orthogonale à l'axe de pivotement (B), **caractérisé en ce que** la source lumineuse (28) est formée par l'image virtuelle d'une diode électroluminescente (42) fixe par un miroir (46) qui est monté rotatif autour d'un axe de rotation (C) parallèle à l'axe de pivotement (B) du faisceau lumineux (22).

2. Projecteur (20) selon la revendication précédente, **caractérisé en ce que** les moyens optiques (30) sont formés par une lentille convergente.

3. Projecteur (20) selon l'une quelconque des revendications précédentes, **caractérisé en ce que** la rotation du miroir est commandée automatiquement par un moteur (38).

4. Dispositif d'éclairage (18) automatique et sélectif d'obstacles (52) sur une scène de route pour un véhicule automobile (10) comportant :
- au moins un projecteur (20) réalisé selon la revendication 3;
- des moyens automatiques (24, 26) de détection et de localisation d'au moins un obstacle distant du véhicule ;
- et des moyens de commande (26) de l'orientation et de l'allumage du faisceau lumineux (22) en fonction de la localisation de l'obstacle détecté (52) pour éclairer sélectivement l'obstacle détecté (52) avec le faisceau lumineux (22).

5. Dispositif (18) selon la revendication précédente, **caractérisé en ce que** les moyens automatiques de détection et de localisation de l'obstacle comportent :
- un dispositif (24) de prise d'une image (48) de la scène de route qui est embarqué à bord du véhicule (10) ;
- et des moyens électroniques (26) de traitement de l'image (48) aptes à détecter des obstacles prédéterminés sur l'image (48) et aptes à localiser lesdits obstacles par rapport au véhicule (10).

6. Dispositif (18) selon la revendication précédente, **caractérisé en ce que** le dispositif de prise d'image (24) est formé par une caméra infrarouge.

7. Procédé de commande d'un dispositif (18) automatique et sélectif d'obstacles (52) sur une scène de route pour un véhicule automobile (10) comportant :
- au moins un projecteur (20) selon la revendication 1 ;
- des moyens automatiques (24, 26) de détection et de localisation d'au moins un obstacle distant du véhicule ;
- et des moyens de commande (26) de l'orientation et de l'allumage du faisceau lumineux (22) en fonction de la localisation de l'obstacle détecté (52) pour éclairer sélectivement l'obstacle détecté (52) avec le faisceau lumineux (22), lequel procédé comporte successivement les étapes suivantes :
- une première étape (E1) de détection d'un obstacle (52) ;
- une deuxième étape (E2) d'orientation qui est déclenchée lorsqu'un obstacle (52) est détecté, au cours de laquelle le faisceau lumineux (22) du projecteur (20) est orienté par les moyens de commande en direction de l'obstacle détecté (52) ;
- une troisième étape d'allumage (E3) du faisceau lumineux (22) au cours de laquelle l'obstacle détecté (52) est éclairé par le faisceau lumineux (22),
ledit procédé étant **caractérisé en ce que** lorsqu'au moins deux obstacles (52) sont détectés simultanément, la deuxième étape (E2) et la troisième étape (E3) sont répétées cycliquement alternativement pour chacun des obstacles détectés (52) avec une fréquence déterminée, de manière que les obstacles détectés (52) soient éclairées alternativement, le projecteur (20) étant éteint lors de son orientation d'un obstacle vers l'autre obstacle.

8. Procédé de commande selon la revendication précédente, **caractérisé en ce que** l'éclairage alternatif des deux obstacles détectés (52) est effectué avec une fréquence supérieure au temps de rémanence de la lumière sur un oeil humain, de manière qu'un observateur ait l'impression que les deux obstacles détectés (52) sont éclairés simultanément.

9. Procédé de commande selon l'une des revendications 7 à 8, **caractérisé en ce que** lorsque l'obstacle détecté (52) présente une surface supérieure à la surface éclairée par le faisceau lumineux (22), le projecteur (20) est commandé de manière que le faisceau lumineux (22) balaye la surface de l'obstacle détecté (52) lors de la troisième étape.

10. Procédé de commande du dispositif selon l'une quelconque des revendications 7 à 9, **caractérisé en ce que**, lorsque aucun obstacle n'est détecté lors de la première étape (E1), le faisceau lumineux (E1) est orienté de manière à éclairer le bas côté de la route sur laquelle roule le véhicule (10).

## Patentansprüche

1. Kraftfahrzeugscheinwerfer (20), der zum Ausstrahlen eines schwenkbaren Lichtbündels (22) bestimmt ist und der umfasst:
- eine punktförmige Lichtquelle (28);
- optische Mittel (30), die das Abbild der Lichtquelle (28) zum Bilden des Lichtbündels (22) projizieren und die einen durch den Schnitt zwischen ihrer optischen Achse (A) und ihrer objektseitigen Brennebene (P) gebildeten objektseitigen Brennpunkt (F) aufweisen;
- Mittel (38, 44, 46) zum Schwenken des Lichtbündels (22) um wenigstens eine Schwenkachse (B);
wobei die Lichtquelle (28) im Wesentlichen in der objektseitigen Brennebene (P) in einer zur Schwenkachse (B) insbesondere orthogonalen Richtung beweglich ist, die das Schwenken des Lichtbündels (22) zu bewirken vermag,
**dadurch gekennzeichnet, dass** die Lichtquelle (28) von dem virtuellen Abbild einer feststehenden Leuchtdiode (42) durch einen Reflektor (46) gebildet ist, der drehbar um eine zur Schwenkachse (B) des Lichtbündels (22) parallelen Drehachse (C) gelagert ist.

2. Scheinwerfer (20) nach dem vorhergehenden Anspruch,
**dadurch gekennzeichnet, dass** die optischen Mittel (30) von einer Sammellinse gebildet sind.

3. Scheinwerfer (20) nach einem der vorhergehenden Ansprüche,
**dadurch gekennzeichnet, dass** die Drehung des Reflektors automatisch durch einen Motor (38) gesteuert wird.

4. Vorrichtung (18) zum automatischen und selektiven Beleuchten von Hindernissen (52) in einer Straßenszene für ein Kraftfahrzeug (10) mit:
- wenigstens einem nach Anspruch 3 ausgeführten Scheinwerfer (20);
- automatischen Mitteln (24, 26) zum Erkennen und Lokalisieren wenigstens eines vom Fahrzeug entfernten Hindernisses;
- und Mitteln (26) zum Steuern des Schwenkens und des Einschaltens des Lichtbündels (22) abhängig von der Lokalisierung des erkannten Hindernisses (52), um das erkannte Hindernis (52) selektiv mit dem Lichtbündel (22) zu beleuchten.

5. Vorrichtung (18) nach dem vorhergehenden Anspruch,
**dadurch gekennzeichnet, dass** die automatischen Mittel zum Erkennen und Lokalisieren des Hindernisses umfassen:
- eine Vorrichtung (24) zur Aufnahme eines Bildes (48) der Straßenszene, die an Bord des Fahrzeugs (10) eingebaut ist;
- und elektronische Mittel (26) zum Verarbeiten des Bildes (48), die geeignet sind, vorbestimmte Hindernisse in dem Bild (48) zu erkennen und diese Hindernisse bezüglich des Fahrzeugs (10) zu lokalisieren.

6. Vorrichtung (18) nach dem vorhergehenden Anspruch,
**dadurch gekennzeichnet, dass** die Bildaufnahmevorrichtung (24) von einer Infrarotkamera gebildet ist.

7. Verfahren zum Steuern einer Vorrichtung (18) zum automatischen und selektiven Beleuchten von Hindernissen (52) in einer Straßenszene für ein Kraftfahrzeug (10) mit:
- wenigstens einem Scheinwerfer (20) nach Anspruch 1;
- automatischen Mitteln (24, 26) zum Erkennen und Lokalisieren wenigstens eines vom Fahrzeug entfernten Hindernisses;
- und Mitteln (26) zum Steuern des Schwenkens und des Einschaltens des Lichtbündels (22) abhängig von der Lokalisierung des erkannten Hindernisses (52), um das erkannte Hindernis (52) selektiv mit dem Lichtbündel (22) zu beleuchten, wobei das Verfahren nacheinander die folgenden Schritte umfasst:
- einen ersten Schritt (E1) zum Erkennen eines Hindernisses (52);
- einen zweiten Schritt (E2) zum Schwenken des Lichtbündels, der beim Erkennen eines Hindernisses (52) ausgeführt wird, während dem das Lichtbündel (22) des Scheinwerfers (20) von den Steuerungsmitteln in Richtung des erkannten Hindernisses (52) geschwenkt wird;
- einen dritten Schritt (E3) zum Einschalten des Lichtbündels (22), während dem das erkannte Hindernis (52) von dem Lichtbündel (22) beleuchtet wird,
wobei das Verfahren **dadurch gekennzeichnet ist, dass** bei gleichzeitigem Erkennen von wenigstens zwei Hindernissen (52) der zweite Schritt (E2) und der dritte Schritt (E3) in regelmäßigen Abständen abwechselnd für jedes der erkannten Hindernisse (52) mit einer bestimmten Frequenz wiederholt wird, so dass die erkannten Hindernisse (52) abwechselnd beleuchtet werden, wobei der Scheinwerfer (20) während seines Schwenkens von einem Hindernis zum anderen ausgeschaltet ist.

8. Steuerungsverfahren nach dem vorhergehenden Anspruch,
**dadurch gekennzeichnet, dass** das abwechselnde Beleuchten der beiden erkannten Hindernisse (52) mit einer Frequenz erfolgt, die höher ist als die Nachleuchtdauer des Lichts beim menschlichen Auge, so dass ein Beobachter den Eindruck hat, dass die beiden erkannten Hindernisse (52) gleichzeitig beleuchtet werden.

9. Steuerungsverfahren nach einem der Ansprüche 7 bis 8,
**dadurch gekennzeichnet, dass** der Scheinwerfer (20), wenn das erkannte Hindernis (52) eine Fläche aufweist, die größer ist als die vom Lichtbündel (22) beleuchtete Fläche, solchermaßen gesteuert wird, dass das Lichtbündel (22) die Fläche des erkannten Hindernisses (52) während des dritten Schritts abtastet.

10. Verfahren zum Steuern der Vorrichtung nach einem der Ansprüche 7 bis 9,
**dadurch gekennzeichnet, dass** das Lichtbündel (22), wenn kein Hindernis während des ersten Schritts (E1) erkannt wird, solchermaßen geschwenkt wird, dass der Fahrbahnrand der vom Fahrzeug befahrenen Straße beleuchtet wird.

## Claims

1. Automobile headlight (20) designed to emit an adjustable light beam (22) comprising:
- a point light source (28)
- optical means (30), projecting the image from the light source (28) to form the light beam (22) and including an object focal point (F) formed by the intersection between its optical axis (A) and its object focal plane (P);
- means (38, 44, 46) for adjusting the light beam (22) around at least one pivoting axis (B);
the light source (28) being substantially movable in the object focal plane (P) along a direction capable of pivoting the light beam (22), wherein the direction is particularly orthogonal to the pivoting axis (B), **characterized in that** the light source (28) is formed by the virtual image from a light-emitting diode (42) fixed by a mirror (46) which is rotationally mounted about an axis of rotation (C) parallel with the pivoting axis (B) of the light beam (22).

2. Headlight (20) according to the above claim, **characterized in that** the optical means (30) are formed by a converging lens.

3. Headlight (20) according to any one of the above claims, **characterized in that** rotation of the mirror is automatically controlled by a motor (38).

4. Automatic and selective lighting device (18) for lighting obstacles (52) on a road scene for a motor vehicle (10) comprising:
- at least one headlight (20) designed according to claim 3;
- automatic means (24, 26) for detecting and locating at least one obstacle remote from the vehicle;
- and means (26) for controlling the adjustment and switching on of the light beam (22) depending on the locality of the detected obstacle (52) to selectively light the detected obstacle (52) with the light beam (22).

5. Device (18) according to the above claim, **characterized in that** the automatic means for detecting and locating the obstacle comprise:
- a device (24) for capturing an image (48) of the road scene which is fitted on board the vehicle (10);
- and electronic means (26) for processing the image (48) capable of detecting predefined obstacles on the image (48) and capable of locating said obstacles relative to the vehicle (10).

6. Device (18) according to the above claim, **characterized in that** the photographic device (24) is formed by an infra-red camera.

7. Method for controlling an automatic and selective lighting device (18) for lighting obstacles (52) on a road scene for a motor vehicle (10) comprising:
- at least one headlight (20) according to claim 1;
- automatic means (24, 26) for detecting and locating at least one obstacle remote from the vehicle;
- and means (26) for controlling the adjustment and switching on of the light beam (22) depending on the locality of the detected obstacle (52) to selectively light the detected obstacle (52) with the light beam (22), said method successively comprising the following stages:
- a first stage (E1) of detecting an obstacle (52);
- a second stage (E2) of adjustment which is triggered if an obstacle (52) is detected, during which time the light beam (22) of the headlight (20) is adjusted by the control means in the direction of the detected obstacle (52);
- a third stage (E3) of switching on the light beam (22) during which time the detected obstacle (52) is lit by the light beam (22),
said method being **characterized in that**, if at least two obstacles (52) are detected simultaneously, the second stage (E2) and the third stage (E3) are cyclically repeated alternately for each detected obstacle (52) with a defined frequency, so that the detected obstacles (52) are lit alternately, the headlight (20) being switched off during its adjustment from one obstacle towards the other obstacle.

8. Method of control according to the above claim, **characterized in that** the two detected obstacles (52) are lit alternately with a frequency greater than the remanence time of light on a human eye, so that an observer has the impression that the two detected obstacles (52) are lit simultaneously.

9. Method of control according to either of claims 7 to 8, **characterized in that**, if the detected obstacle (52) has a surface larger than the surface lit by the light beam (22), the headlight (20) is controlled so that the light beam (22) sweeps the surface of the detected obstacle (52) during the third stage.

10. Method for controlling the device according to any one of claims 7 to 9, **characterized in that**, if no obstacle is detected during the first stage (El), the light beam (El) is adjusted so as to light the verge of the road on which the vehicle (10) is driven.
